# EUROPEAN PATENT SPECIFICATION

(11) **EP 1 044 341 B1**
(45) Date of publication and mention of the grant of the patent: **22.05.2002**
(21) Application number: 98950007.9
(22) Date of filing: 05.09.1998
(51) Int. Cl.: F16L 29/02, F16L 29/04, F16L 37/32, F16L 37/40

(54) **PIPE FITTING WITH AUTOMATIC RELEASE AND IMMEDIATE WATER SEAL CLOSING IN RESPONSE TO A STRONG AXIAL TRACTION**
AUTOMATISCH LÖSBARE ROHRVERBINDUNG MIT UNMITTELBARER WASSERSPERRUNG INFOLGE EINES HOHEN AXIALEN ZUGES
RACCORD DE TUYAU AVEC DECHARGE AUTOMATIQUE ET FERMETURE IMMEDIATE DE JOINT HYDRAULIQUE EN REACTION A UNE FORTE TRACTION AXIALE

(30) Priority: 29.09.1997 IT MI972199
(43) Date of publication of application: 18.10.2000
(73) Proprietor: IMFC Licensing B.V., 1079 LH Amsterdam (NL)
(72) Inventor: BORMIOLI, Giorgio, I-35100 Padova (IT)
(74) Representative: Mittler, Enrico
(86) International application number: EP9805725
(87) International publication number: WO9917044

(56) References cited:
- US-A- 4 445 664
- US-A- 4 664 149
- US-A- 5 507 313

## Description

The present invention concerns a pipe fitting with automatic release and immediate water seal closing in response to a strong axial traction.

Pipe fittings, used particularly in oil field for the coupling of flexible pipes in movement, for example between ship and ship, ship and land, ship and oil offshore rig, in which it is expected that possible strong axial traction stresses due to causes of any kind would automatically provoke the release of the fitting and the immediate intercepting of the hydraulic flow under course are already known. In this way it is possible to prevent that an axial traction above a maximum limit bearable by the flexible pipes would determine the deterioration of the same pipe.

US-A-4445664 discloses a pipe fitting in which the passage between first and second parts of the fitting is closed by rotation and translation of a ball segment valve arranged in the first part until the valve sealingly engages a fixed seat.

US-A-4664149 discloses a pipe fitting formed by first and second fitting parts each controlled by a respective ball valve.

US-A-5507313 discloses a pipe fitting formed by first and second fitting parts provided with an automatic release coupling device and controlled by respective interconnected ball valves.

Object of the present invention is to provide a fitting of the aforementioned type, that in case of automatic release due to axial traction above a maximum limit would provide a particularly efficient simultaneous water seal closing.

According to the invention, such object is attained with a fitting as defined in claim 1.

In this way the release of the two parts of the fitting, and therefore of the two parts of pipe coupled by the fitting itself, in the instance of a particularly high and dangerous axial traction stress is automatically driven by a movement of the ball segment valve, which not only causes its rotation from an opening position to a closing position but it also gives it a forced axial engagement against a seal packing, that ensures a perfect water seal and therefore prevents undesirable wastes of product.

A few embodiments of the present invention are illustrated as a nonlimiting example in the enclosed drawings, in which:
Figure 1 shows in an axial section a single valve embodiment of the fitting according to the present invention, in an operating position;
Figure 2 shows the aforementioned fitting in a cross section according to the line II-II of Figure 1;
Figure 3 shows the same fitting in a cross section according to the line III-III of Figure 1;
Figure 4 shows the same fitting in a longitudinal section according to the line IV-IV of Figure 1;
Figure 5 shows a magnified detail of the fitting of the previous figures;
Figure 6 shows the fitting of Figure 1 in the release and water seal position;
Figure 7 shows the fitting of Figure 1 at the beginning of the release stage in case of a not exactly axial traction;
Figure 8 shows in an axial section a two valve embodiment of the fitting accordig to the invention, in an operating position;
Figure 9 shows the fitting of Figure 8 in a release and water seal positions.

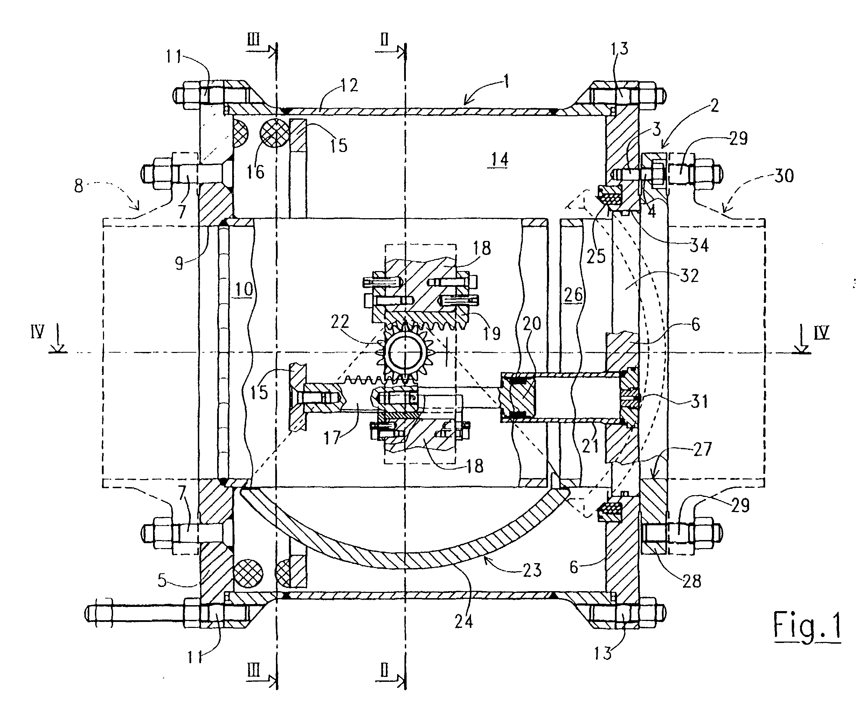

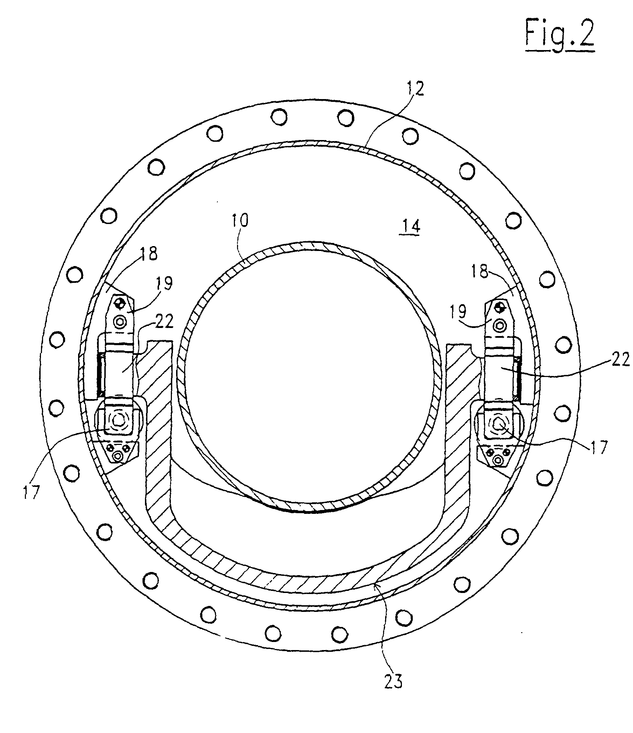

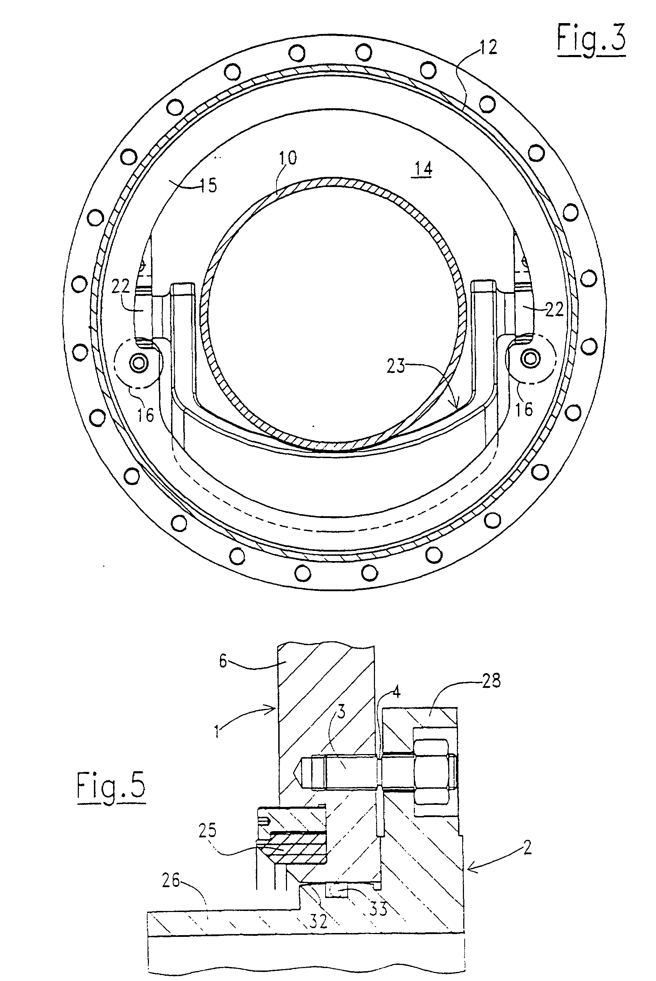

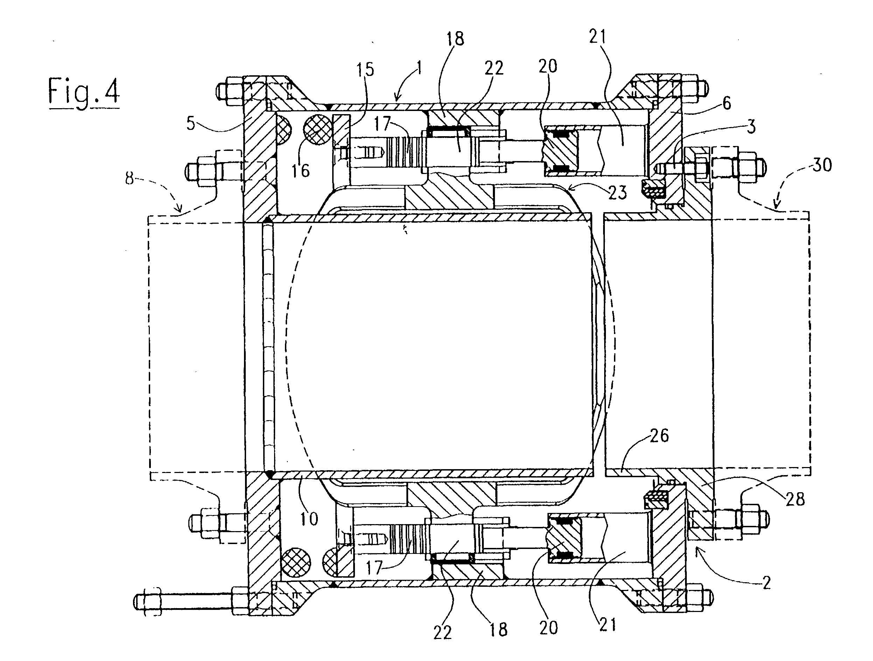

The pipe fitting illustrated in Figures 1-7 is of the single valve type and it comprises a first and a second part 1 and 2 that are fixable to each other by means of a circumferencial series of break screws 3 having a intermediate length 4 with reduced, or weakened, section (Figure 1).

The first part 1 of the fitting comprises a first an a second annular flange 5 and 6, the first one of which is fixable by means of screws 7 to a first part of pipe 8, more precisely the one destined to deliver fluid. From the same flange 5, in coincidence with its central hole 9, a cylindrical duct 10 defining an axial passage for the flow of fluid that goes through the fitting extends in the opposite direction but axially lined up with the part of the fitting 8. Coaxial to the duct 10 and outside of it a cylindrical coupling box 12 that ends as fixed by screws 13 in correspondence of the flange 6, still extends from the flange 5, to which it is fixed by means of screws 11.

In the annular space 14 defined between the duct 10 and the coupling box 12 a disc 15 sliding in axial direction is housed, that is thrust toward the right (looking at Figure 1) by a pressure spring 16, that is possibly replaceable by several springs coaxial to each other.

Two rack rods 17 (Figures 1, 2 and 4) slidingly sustained by a pair of supports 18 fixed inside the coupling box 12 are symmetrically fixed to the sliding disc 15. In addition, respective toothed segments 19 are fixed to the same supports 18, in a position opposite to the rack rods 17.

Each rack rod 17 ends with a piston 20 slidingly housed inside a respective cylinder 21 that is fixed to the flange 6. The cylinder 21 is normally filled with oil that is not in pressure, that in case of backing of the piston 20 as regards the position of Figure 1 can outflow at a controlled speed through a gauged hole 31 (Figure 1), as it will be better explained further on.

Between each rack rod 17 and the corresponding toothed segment 19 and a in toothed engagement with them a gear wheel 22 is arranged, which as caused by the aforementioned engagement is capable to rotate around its axes, perpendicular to the longitudinal axes of the duct 10 and of the coupling box 12 and passing through it, and to slide parallel to the same longitudinal axes.

The axes of rotation of the two gear wheels 22 is also the pivot pin of the rotation of a ball segment valve 23 (1/4 of ball in the example illustrated), that is fixed to the same gear wheels and owing to the rotary-sliding movement of the same it can be moved from the opening position illustrated with a solid line in Figure 1 into the closing position illustrated in dots and lines in the same figure. In this latter position of the spherical back surface 24 of the valve is not only rotated perpendicular to the axes of the fitting but also pressed against an annular seal packing 25 fit into a corresponding housing of the flange 6.

The second part 2 of the fitting comprises in turn a cylindrical duct 26, that is of the same diameter of the duct 10 of the first part 1 and it is axially lined up with it in such a way so as to complete the axial passage for the flow of fluid through the fitting. Besides, a short circumferencial interval between the same ones (Figure 1) allows to maintain said axial passage into communication with the previously defined annular space 14.

The cylindrical duct 26 axially extends from the central hole 27 of a flange 28 having reduced external diameter as compared to the flanges 5 and 6 of the first part of the fitting. The corresponding face of the flange 28 is normally fixed to the flange 6 owing to the previously mentioned break screws 3. A second part of the pipe 30, more precisely the one destined to receive the fluid being delivered, is instead fixable to the other face of the same flange 28 by means of screws 29.

Because of the described structure, the normal operating state of the fitting is the one illustrated in Figure 1, where the break screws 3 keep together the two fitting parts 1 and 2 and therefore the two pipe parts 8 and 30, the valve 23 is open and it is maintained like that by its contrasting with the wall of the cylindrical duct 26 and the delivered fluid can pass from the first pipe part 8 to the second pipe part 30 through the axial passage defined by the two lined up cylindrical ducts 10 and 26. without any obstacle.

If in this condition one of the two pipe parts should be subjected to an axial traction stress above the allowed limit, the weakened parts 4 of the break screws 3 would break, thus allowing the flange 28 of the second part of the fitting to move apart from the flange 6 of the first fitting part (or vice versa). Not being retained by the wall of the duct 26, the valve 23 would start rotating and sliding under the effect of the elastic bias exerted by the spring 16 on the annular disc 15, that in turn would provoke the axial sliding of the two rack rods 17, and in combination with the fixed toothed segments 19, the rotation and the axial movement of the two gear wheels 22 and therefore of the valve 23 with a speed depending on the resistance exerted by the oil inside the cylinder 21 on the piston 20, that is on the speed of the oil outflow from the same cylinder, still that is on the gauging of the gauged hole 31.

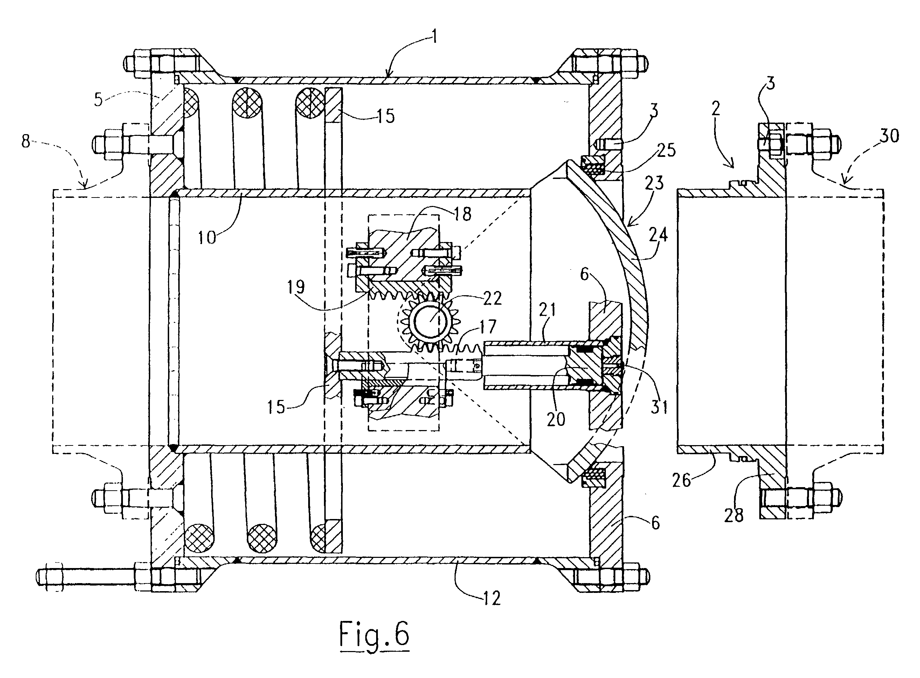

The fitting therefore turns out to be in the released and water seal condition that is shown in Figure 6.

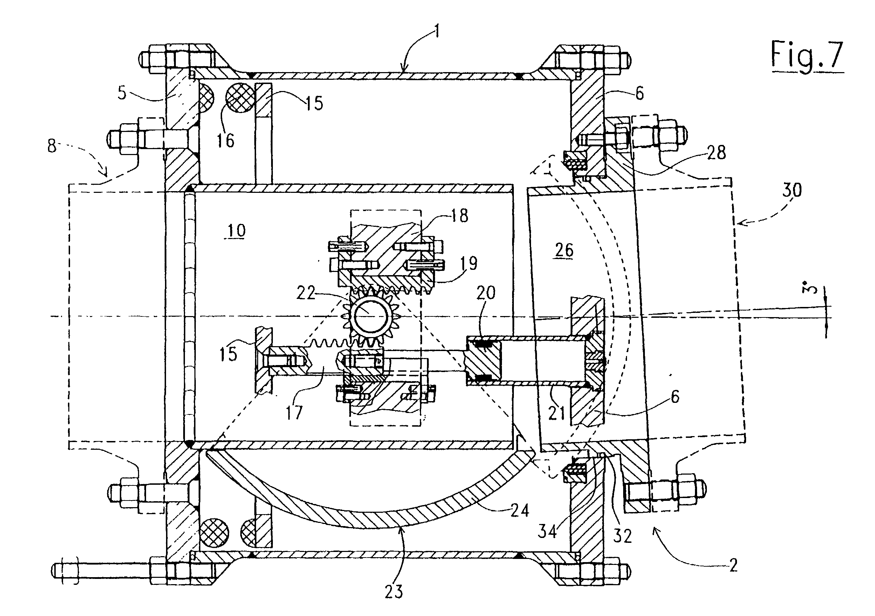

It must be noted that the separation of the two parts of the fitting is favoured by the rounded shape of the length of external wall 32 of the duct 26 that through an O-ring 33 is normally water seal coupled with the central hole 34 of the flange 6 (Figure 5). Indeed, such rounding allow the slipping of the duct 26 out of the central hole of the flange 6 even in case of a not perfectly axial stress exerted on the two parts of the fitting (Figure 7).

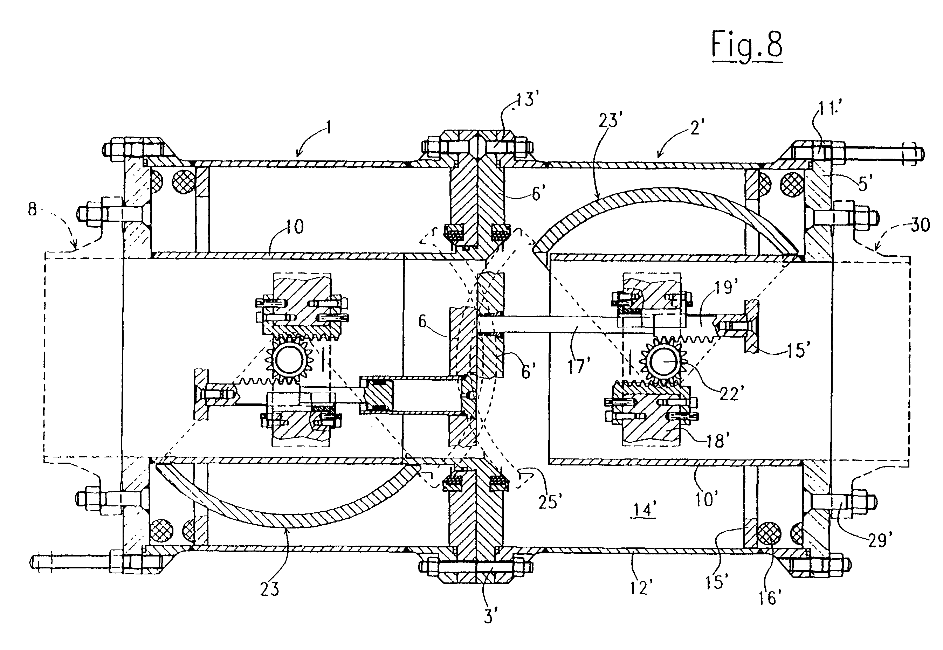

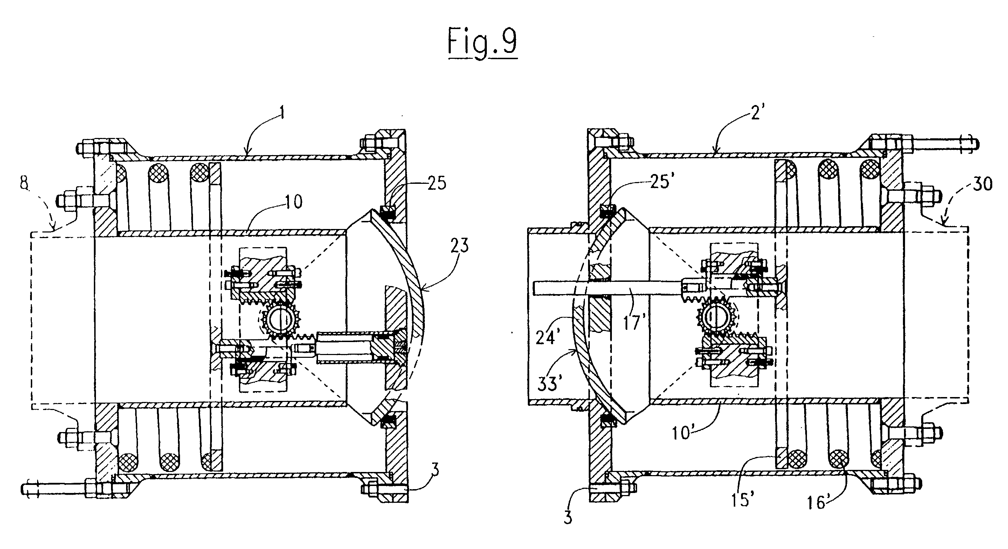

Conceptually not dissimilar are structure and way in which the fitting with two valves illustrated in Figures 8 and 9 works.

More precisely, the first part 1 of the fitting is absolutely identical. while the second part, herein indicated by 2', is changed.

More precisely, the part 2' has a flange 6' conformed as the flange 6 of the fitting of Figures 1-7 and similarly provided with an annular packing 25', a second flange 5' of equal diameter fixable to the second part of pipe 30 by means of screws 29' and a cylindrical coupling box 12' for the coupling between the flanges 6' and 5'. that is fixed to the same flanges by means of screws 13' and 11'. The two set aside flanges 6 and 6' of the two parts of the fitting are normally kept together by break screws 3.

A cylindrical duct 10' that ends before it reaches the flange 6' and forms in tum a passage for fluid that is lined up with the one defined by the ducts 10 and 26, extends from the flange 5' too toward the flange 6', coaxial to the the coupling box 12' an inside of it.

In the annular space 14' between the duct 10' and the coupling box 12' an annular disc 15' that is elastically biased by a pressure spring 16' is similarly arranged in an axially sliding way.

The disc 15' and the spring 16' control the rotary-sliding movement of a ball segment valve 23' through a mechanism entirely similar to the one already described for the first part of the fitting 1, and precisely comprising sliding racks 17', supports 18', fixed toothed segments 19' and gear wheels 22' with rotary-sliding movement, with the only exception that the rack rods 17' do not end in a piston as piston 20 but they instead slidingly pass through the flange 6' until they end up abutting, when the fitting is coupled. against the flange 6 of the first part of the fitting 1 (Figure 8). Such abutment engagement allows the valve 23' to maintain itself in the opening position illustrated as a solid line in Figure 8 against the elastic strain of the of the spring 16' and possible traction stresses below the prefixed limit.

In case of a traction stress having entity such as to provoke the breaking of the screws 3, the two parts of the fitting move one apart from the other in a way similar to what described for the fitting of figures 1-7 and, being therefore the abutment engagement of the rack rods 17' with the flange 6 lost, the spring 16' can force through the disc 15', the racks 17', the toothed sectors 19' and the gear wheels 22' the rotary-sliding movement of the valve 23' until this engages with its arched back 24' the annular seal packing 25' (Figure 9).

## Claims

1. Pipe fitting with automatic release and immediate water seal closing in response to a strong axial traction, the pipe fitting being formed of two fitting parts (1,2,2') passed through by respective axial ducts (10, 26, 26') for a flow of fluid and provided with means (3) for rigid coupling of said parts (1, 2, 2'), said coupling means (3) being formed in such a way so as to allow the separation of the said parts in case of an axial traction above a predetermined limit, at least a first one (1) of said fitting parts (1,2,2') comprising a means (23) for the interception of the flow of fluid that is automatically activated up to a water seal closing position by a separation movement of said fitting parts, said means (23) for the interception of the flow of fluid consisting of a ball segment valve (23) that responds to said separation movement with a combined motion of rotation around an axis perpendicular to the longitudinal axis of the respective fluid duct and of sliding along said longitudinal axis until it reaches a forced rest and water seal position against a seal packing (25), **characterized in that** said coupling means (3) consist of breaking screws (3) which are automatically rupturable by axial traction above said predetermined limit and said valve (23) is provided with a mechanism for activating said rotary-sliding movement which comprises at least one sliding rack rod (17) and at least one toothed segment (19) cooperating on opposite sides with at least one gear wheel (22) forming an actuating pin for said valve (23), there being provided elastic means (16) for thrusting said rack rod (17) toward a valve closing position, retaining means (26) for retaining said valve (23) in an opening position when the pipe fitting is coupled and up to the beginning of the separation movement of said fitting parts (1, 2, 2'), and means (20, 21, 31) for controlling the speed of movement of the rack rod (17) toward the valve closing position during the separation movement of the fitting parts (1, 2, 2'), said means (20, 21, 31) for controlling the speed of movement of the rack rod (17) comprising a piston (20) fixed to the other end of the rack rod (17) and slidingly housed inside a hydraulic cylinder (21) provided with a gauged hole (31) for the outflow of a hydraulic fluid from said cylinder (21).

2. Fitting according to claim 1, **characterized in that** said elastic means (16) consist of at least one pressure spring (16) acting upon a sliding disc (15) that is fixed on one end of said rack rod (17).

3. Fitting according to claim 1, **characterized in that** said retaining means (26) consist of the axial duct (26) of the second part (2, 2') of the fitting.

4. Fitting according to claim 1, **characterized in that** the second part (2') of the fitting comprises a means (23') for the interception of the flow of fluid that consists of an additional ball segment valve (23') that responds to said separation movement with a combined motion of rotation around an axis perpendicular to the longitudinal axis of the respective fluid duct and of sliding along said longitudinal axes until it reaches a forced rest and water seal position against a seal packing (25').

5. Fitting according to claim 4, **characterized in that** said additional valve (23') is provided with a mechanism for activating its rotary-sliding activation which comprises at least one additional sliding rack rod (17') and at least one additional toothed segment (19') cooperating on opposite sides with at least one additional gear wheel (22') forming an actuating pin for said additional valve (23'), there being provided additional elastic means (16') for thrusting said additional rack rod (17') toward a closing position of said additional valve (23'), additional retaining means (6) for retaining said additional valve (23) in an opening position when the pipe fitting is coupled and up to the beginning of the separation movement of said fitting parts (1, 2, 2').

6. Fitting according to claim 5, **characterized in that** said additional elastic means (16') consist of at least one pressure spring (16') acting upon an additional sliding disc (15') that is fixed on one end of said additional rack rod (17').

7. Fitting according to claim 6, **characterized in that** said additional retaining means (6) are formed of an end flange (6) of the first part (1) of the fitting with which the other end of said additional rack rod (17') abuts when the fitting is coupled.

8. Fitting according to claim 7, **characterized in that** said second part (2, 2') of the fitting has an axial duct (26) provided with an intermediate flange (32) that is water tight inserted into an axial hole (34) of an end flange (6) of the first part (1) of the fitting, said intermediate flange (32) having a rounded external wall so as to allow the axial duct (26) of the second part (2,2') of the fitting to slip out of said axial hole (34) of the end flange (6) of the first part (1) of the fitting even in case of not prefectly axial traction stress above the prefixed limit.

## Patentansprüche

1. Rohrverbindung mit automatischem Lösevorgang und sofortiger Wasserabsperrung mit Verschluß in Abhängigkeit von einer starken Zugkraft, wobei die Rohrverbindung von zwei Paßteilen (1, 2, 2') gebildet wird, welche von zugeordneten axialen Leitungen (10, 26, 26') für einen Fluidströmungsdurchgang durchzogen und mit einer Einrichtung (3) zur starren Verbindung dieser Teile (1, 2, 2') versehen sind, die Verbindungsteile (3) derart ausgebildet sind, daß eine Trennung der Teile im Falle einer axialen Zugkraft über einem vorbestimmten Grenzwert ermöglicht wird, wenigstens ein erstes Teil (1) der Verbindungsteile (1, 2, 2') eine Einrichtung (23) zur Unterbrechung der Fluidströmung aufweist, welche automatisch zur Einnahme einer Wasserabsperr-Schließposition durch eine Trennbewegung der Paßteile aktiviert wird, die Einrichtung (23) zur Unterbrechung der Fluidströmung ein Kugelsegmentventil (23) aufweist, welches auf die Trennbewegung mit einer kombinierten Drehbewegung um eine Achse senkrecht zu der Längsachse der zugeordneten Fluidleitung und einer Gleitbewegung längs der Längsachse anspricht, bis dieses zwangsweise eine Ruhe- und Wasserabsperrposition in Anlage gegen eine Dichtungspackung (25) erreicht, **dadurch gekennzeichnet, daß** die Verbindungseinrichtung (3) zerbrechbare Schrauben (3) aufweist, welche automatisch durch die axiale Zugkraft über den vorbestimmten Grenzwert durchbrechen, und das Ventil (23) mit einer Einrichtung zum Aktivieren der Dreh-Gleit-Bewegung versehen ist, welche wenigstens eine gleitbewegliche Zahnstange (17) und wenigstens ein Zahnsegment (19) aufweist, welche auf gegenüberliegenden Seiten mit wenigstens einem Zahnrad (22) zusammenarbeiten, welches einen Betätigungszapfen für das Ventil (23) bildet, daß eine elastische Einrichtung (16) vorgesehen ist, welche die Zahnstange (17) in Richtung einer Ventilschließposition mit einer Druckkraft beaufschlagt, ferner eine Halteeinrichtung (26) vorgesehen ist, welche das Ventil (23) in einer Offenposition hält, wenn die Rohrverbindung den Verbindungszustand einnimmt und bis zu dem Beginn der Trennbewegung der Paßteile (1, 2, 2'), und eine Einrichtung (20, 21, 31) aufweist, um die Bewegungsgeschwindigkeit der Zahnstange (17) in Richtung der Ventilschließposition während der Trennbewegung der Paßteile (1, 2, 2') zu steuern, wobei die Einrichtung (20, 21, 31) zum Steuern der Bewegungsgeschwindigkeit der Zahnstange (17) einen Kolben (20) aufweist, welcher fest mit dem anderen Ende der Zahnstange (17) verbunden und gleitbeweglich im Innern eines Hydraulikzylinders (21) untergebracht ist, welcher mit einer Dosieröffnung (31) für den Strom eines Hydraulikfluids aus dem Zylinder (21) versehen ist.

2. Rohrverbindung nach Anspruch 1, **dadurch gekennzeichnet, daß** die elastische Einrichtung (16) wenigstens eine Druckfeder (16) umfaßt, welche eine Gleitscheibe (15) beaufschlagt, welche fest an einem Ende der Zahnstange (17) angebracht ist.

3. Rohrverbindung nach Anspruch 1, **dadurch gekennzeichnet, daß** die Halteeinrichtung (26) die axiale Leitung (26) des zweiten Teils (2) der Rohrverbindung umfaßt.

4. Rohrverbindung nach Anspruch 1, **dadurch gekennzeichnet, daß** das zweite Teil (2') der Rohrverbindung eine Einrichtung (23') zur Unterbrechung der Fluidströmung aufweist, welche ein zusätzliches Kugelsegmentventil (23') hat, welches auf die Trennbewegung mit einer kombinierten Drehbewegung um eine Achse senkrecht zu der Längsachse der zugeordneten Fluidleitung und einer Gleitbewegung längs den Längsachsen anspricht, bis es eine zwangsweise Ruhe- und Wasserabsperrposition unter Anlage gegen eine Dichtpakkung (25') erreicht.

5. Rohrverbindung nach Anspruch 4, **dadurch gekennzeichnet, daß** das zusätzliche Ventil (23') eine mechanische Einrichtung zur Aktivierung der Dreh-Gleit-Bewegung aufweist, welche wenigstens eine zusätzliche, gleitbewegliche Zahnstange (17) und wenigstens ein zusätzliches Zahnsegment (19') aufweist, welches auf gegenüberliegenden Seiten mit wenigstens einem zusätzlichen Zahnrad (22') zusammenarbeitet, welches einen Betätigungszapfen für das zusätzliche Ventil (23') bildet, daß eine zusätzliche, elastische Einrichtung (16') zur Druckbeaufschlagung der zusätzlichen Zahnstange (17') in Richtung einer Schließposition des zusätzlichen Ventils (23') und eine zusätzliche Halteeinrichtung (6) vorgesehen ist, welche das zusätzliche Ventil (23) in einer Offenposition hält, wenn die Rohrverbindung hergestellt ist, bis zu dem Beginn der Trennbewegung der Paßteile (1, 2, 2').

6. Rohrverbindung nach Anspruch 5, **dadurch gekennzeichnet, daß** die zusätzliche, elastische Einrichtung (16') wenigstens eine Druckfeder (16') aufweist, welche eine zusätzliche Gleitscheibe (15') beaufschlagt, welche fest an einem Ende der zusätzlichen Zahnstange (17') vorgesehen ist.

7. Rohrverbindung nach Anspruch 6, **dadurch gekennzeichnet, daß** die zusätzliche Halteeinrichtung (6) von einem Endflansch (6) des ersten Teils (1) der Rohrverbindung gebildet wird, mit dem das andere Ende der zusätzlichen Zahnstange (17') in Anlageberührung kommt, wenn die Rohrverbindung hergestellt ist.

8. Rohrverbindung nach Anspruch 7, **dadurch gekennzeichnet, daß** das zweite Teil (2, 2') der Rohrverbindung eine axiale Leitung (26) hat, welche mit einem Zwischenflansch (32) versehen ist, welcher wasserdicht in eine axiale Öffnung (34) eines Endflansches (6) des ersten Teils (1) der Rohrverbindung eingesetzt ist, und der Zwischenflansch (32) eine gerundete, externe Wand derart hat, daß ermöglicht wird, daß die axiale Leitung (26) des zweiten Teils (2, 2') der Rohrverbindung sich aus der axialen Öffnung (34) des Endflansches ( 6) des ersten Teils (1) der Rohrverbindung selbst dann herausbewegt, wenn die axiale Zugbelastung nicht vollständig den vorbestimmten Grenzwert überschreitet.

## Revendications

1. Raccord de tuyau avec libération automatique et fermeture étanche à l'eau immédiate en réponse à une traction axiale forte, le raccord de tuyau étant formé avec deux parties de raccord (1, 2, 2') traversées par des conduites axiales (10, 26, 26') respectives pour un écoulement de fluide et pourvues de moyens (3) pour l'accouplement rigide desdites parties (1, 2, 2'), lesdits moyens d'accouplement (3) étant formés de manière à permettre la séparation desdites parties en cas d'une traction axiale au-dessus d'une limite prédéterminée, au moins une première (1) desdites parties de raccord (1, 2, 2') comportant des moyens (23) pour l'interception de l'écoulement de fluide qui sont automatiquement activés jusqu'à une position de fermeture étanche à l'eau par un mouvement de séparation desdites parties de raccord, lesdits moyens (23) pour l'interception d'écoulement de fluide se composant d'une soupape à segment de bille (23) qui répond au dit mouvement de séparation avec un mouvement de rotation combiné autour d'un axe perpendiculaire à l'axe longitudinal de la conduite de fluide respective et de coulissement le long dudit axe longitudinal jusqu'à ce qu'elle atteigne une position de repos forcée et étanche à l'eau contre une garniture d'étanchéité (25), **caractérisé en ce que** lesdits moyens d'accouplement (3) se composent de vis de rupture qui peuvent être rompues automatiquement par une traction axiale au-dessus de ladite limite prédéterminée et ladite soupape (23) est pourvue d'un mécanisme destiné à activer ledit mouvement rotatif-coulissant qui comprend au moins une tige de crémaillère coulissante (17) et au moins un segment denté (19) qui coopère sur des côtés opposés avec au moins une roue dentée (22) formant un axe d'actionnement pour ladite soupape (23), des moyens élastiques (16) destinés à pousser ladite tige de crémaillère (17) vers une position de fermeture de soupape, des moyens de retenue (26) destinés à retenir ladite soupape (23) dans une position ouverte lorsque le raccord de tuyau est relié et jusqu'au début du mouvement de séparation desdites parties de raccord (1, 2, 2'), et des moyens (20, 21, 31) destinés à commander la vitesse de mouvement de la tige de crémaillère (17) vers la position de fermeture de soupape pendant le mouvement de séparation des parties de raccord (1, 2, 2') étant prévus, lesdits moyens (20, 21, 31) destinés à commander la vitesse de mouvement de la tige de crémaillère (17) comportant un piston (20) fixé sur l'autre extrémité de la tige de crémaillère (17) et logé de façon coulissante à l'intérieur d'un cylindre hydraulique (21) pourvu d'un trou calibré (31) pour l'écoulement vers l'extérieur du fluide hydraulique depuis ledit cylindre (21).

2. Raccord selon la revendication 1, **caractérisé en ce que** lesdits moyens élastiques (16) se composent d'au moins un ressort de pression (16) qui agit sur un disque coulissant (15) qui est fixé sur une extrémité de ladite tige de crémaillère (17).

3. Raccord selon la revendication 1, **caractérisé en ce que** lesdits moyens de retenue (26) se composent de ladite conduite axiale (26) de la deuxième partie (2, 2') du raccord.

4. Raccord selon la revendication 1, **caractérisé en ce que** la deuxième partie (2) du raccord comporte des moyens (23') pour l'interception de l'écoulement de fluide qui se composent d'une soupape à segment de bille additionnelle (23') qui répond au dit mouvement de séparation avec un mouvement combiné de rotation autour d'un axe perpendiculaire à l'axe longitudinal de la conduite de fluide respective et de coulissement le long desdits axes longitudinaux jusqu'à ce qu'elle atteigne une position de repos forcée et étanche à l'eau contre une garniture d'étanchéité (25').

5. Raccord selon la revendication 4, **caractérisé en ce que** ladite soupape additionnelle (23') est pourvue d'un mécanisme destiné à activer son activation rotative-coulissante qui comprend au moins une tige de crémaillère coulissante additionnelle (17') et au moins un segment denté additionnel (19') qui coopère sur des côtés opposés avec au moins une roue dentée additionnelle (22') formant un axe d'actionnement pour ladite soupape additionnelle (23'), des moyens élastiques additionnels (16') destinés à pousser ladite tige de crémaillère additionnelle (17') vers une position de fermeture de ladite soupape additionnelle (23'), des moyens de retenue additionnels (6) destinés à retenir ladite soupape additionnelle (23) dans une position d'ouverture lorsque le raccord de tuyau est relié et jusqu'au début du mouvement de séparation desdites parties de raccord (1, 2, 2') étant prévus.

6. Raccord selon la revendication 5, **caractérisé en ce que** lesdits moyens élastiques additionnels (16') se composent d'au moins un ressort de pression (16') qui agit sur un disque coulissant additionnel (15') qui est fixé sur une extrémité de ladite tige de crémaillère additionnelle (17').

7. Raccord selon la revendication 6, **caractérisé en ce que** lesdits moyens de retenue additionnels (6) sont formés par une bride d'extrémité (6) de la première partie (1) du raccord avec laquelle l'autre extrémité de ladite tige de crémaillère additionnelle (17') bute lorsque le raccord est relié.

8. Raccord selon la revendication 7, **caractérisé en ce que** ladite deuxième partie (2, 2') du raccord possède une conduite axiale (26) pourvue d'une bride intermédiaire (32) qui est insérée de manière étanche à l'eau dans un trou axial (34) d'une bride d'extrémité (6) de la première partie (1) du raccord, ladite bride intermédiaire (32) ayant une paroi externe arrondie de façon à permettre à la conduite axiale (26) de la deuxième partie (2, 2') du raccord de glisser hors dudit trou axial (34) de la bride d'extrémité (6) de la première partie (1) du raccord même dans le cas d'une contrainte de traction qui n'est pas parfaitement axiale au-dessus de la limite préfixée.
